# EUROPEAN PATENT SPECIFICATION

(11) **EP 2 414 213 B1**
(45) Date of publication and mention of the grant of the patent: **18.09.2019**
(21) Application number: 09842766.9
(22) Date of filing: 30.03.2009
(51) Int. Cl.: B62D 7/14, B62D 21/14

(54) **A STEERABLE VEHICLE AND A METHOD FOR CONTROLLING THE SAME**
LENKBARES FAHRZEUG UND STEUERVERFAHREN DAFÜR
VÉHICULE ORIENTABLE ET PROCÉDÉ POUR COMMANDER CELUI-CI

(43) Date of publication of application: 08.02.2012
(73) Proprietor: Volvo Lastvagnar AB, 405 08 Göteborg (SE)
(72) Inventor: LARSSON, Lena, SE-426 74 Västra Frölunda (SE); ÖBERG, Jan, SE-417 29 Göteborg (SE); SKOGLUND, Alfred, SE-423 39 Torslanda (SE)
(74) Representative: Valea AB
(86) International application number: PCT/SE2009/000167
(87) International publication number: WO 2010/114427

(56) References cited:
- WO-A1-2005/047042
- US-A1- 2006 261 214
- US-B1- 6 283 483
- US-B1- 6 341 251

## Description

### TECHNICAL FIELD OF THE INVENTION:

The present invention relates to a steerable vehicle in accordance with the preamble of the accompanying claim 1. In particular, the invention will find its application in connection with automotive vehicles, and is intended to be a device for controlling wheel speed individually for each driven wheel of said vehicle. The invention also relates to a method intended for such steerable vehicle, in accordance with the preamble of the accompanying claim 10.

The present invention also relates to a computer program, computer program product and a storage medium for a computer all to be used with a computer for executing said method.

### BACKGROUND OF THE INVENTION:

For example a truck can be equipped with a 6x6 wheel drivetrain, which means that said truck has 6 wheels and all of them are driven. A front axle can have an Ackerman steering device for steering said truck. Two rear axles can be driven through a propeller shaft and three differentials, where said differentials compensate for the difference in rotational speeds for the rear wheels on each side of the vehicle and for a rotational speed difference between the two rear axles. The wheels on the front axle can be driven by hydraulic wheel motors arranged in the vicinity of each front wheel. According to known art there is usually a fixed ratio between said rear driven axles and said front wheels, which means that wheel slip can occur when said truck, for example, drives through a roundabout and said wheels are driven with wheel speeds that are not compensated for a wheel path of each wheel. Said wheel slip results both in increased fuel consumption and increased wear of tyres.

A known solution for how to adapt said wheel speeds is known through JP3901431 where a 4x4 wheeled electric driven industrial vehicle with vehicle steering is disclosed. Here, the wheel speed for each driven wheel is calculated in dependence of demanded acceleration and steering angle in order to minimize wheel slip when the vehicle travels through a turn.

US5465806 discloses a 4x4 wheeled electric driven vehicle with Ackerman steering. Also here the wheel speed for each driven wheel is calculated in dependence of a steering angle in order to minimize wheel slip when the vehicle travels through a turn.

WO2005047042 discloses another example of vehicle configuration with articulated steering and axle steering, and where the relative steering angle for each consecutive pair of drive axles is registered and the rotational speed for each drive wheel of each drive axle is controlled by the registered relative steering angle associated with said axle. Driven wheels on right hand side and left hand side, respectively, of the vehicle essentially follow the same wheel tracks.

The object of the present invention is to provide a more advanced arrangement for minimizing wheel slip when the vehicle travels through a turn, and at the same time not to increase complexity of handling the vehicle.

### SUMMARY OF THE INVENTION

A technical problem addressed by the present invention is to provide a more advanced drivetrain (propulsion unit and transmission) control. Moreover, the present invention seeks to provide such a drivetrain control that is automatically adaptable to a prevailing steering angle and a flexible wheelbase of a vehicle, such as for example; a vehicle equipped with bogie lift, more than one steering devices or a device for varying the length of a vehicle frame of said vehicle.

An object of the present invention is to provide an improved drivetrain control which is capable of further minimizing wheel slip without increasing handling complexity of the vehicle.

This object is addressed by a steerable vehicle as defined in appended claim 1. According to a first aspect of the invention, there is provided a steerable vehicle that comprises (includes, but is not necessarily limited to) a first vehicle steering device, vehicle wheels arranged on at least one front axle and on at least two rear axles, where said front axle and at least one of said rear axles are driven, and where a control unit is arranged to register parameters;
- steering angle of the vehicle,
- wheelbase of the vehicle,
- wheel track of the vehicle and based on said parameters further to calculate a wheel speed for each driven wheel in order to control wheel speed
for said driven wheels with minimized wheel slip, characterized in that
said control unit is arranged to automatically register altered wheelbase and recalculate said wheel speeds for each driven wheel accordingly.

According to a further embodiment of the preceding embodiment of the vehicle according to the invention, said wheelbase is altered with at least one of:
a. a device for differentiation of axle load on said rear axles,
b. a bogie lift arranged for lifting one or several of said rear axles,
c. a second vehicle steering device, where said first and second vehicle steering devices are arranged to be used in combination or one at a time,
d. a vehicle frame comprising a device for varying the length of said vehicle frame.

According to another embodiment of the preceding embodiment of the vehicle according to the invention, said first vehicle steering device is an Ackerman steering device arranged on said front wheels and said second vehicle steering device is an articulated steering device arranged on said vehicle frame between said front and rear wheels.

According to another embodiment of the preceding embodiment of the vehicle according to the invention, a third vehicle steering device is arranged on said vehicle frame between said front and rear wheels as another articulated steering device.

According to one further embodiment of the vehicle according to the invention, said first vehicle steering device is an Ackerman steering device arranged on said front wheels and said second vehicle steering device is another Ackerman steering device arranged on said rear wheels.

According to one embodiment of the vehicle according to the invention said vehicle comprising three rear axles. This embodiment is characterized in that said second steering device is an Ackerman steering device arranged on two of said three rear axles.

According to a further embodiment of one of said two preceding embodiments of the vehicle according to the invention said vehicle comprises two front axles. This embodiment is characterized in that said first steering device is an Ackerman steering device arranged on said two front axles.

According to another embodiment of the vehicle according to the invention, at least one of said rear axles is driven by a first propulsion unit, and said wheels on said front axle or axles are individually driven by a second propulsion unit arranged in close connection to each of said front wheels.

According to a further embodiment of the vehicle according to the invention said second propulsion unit is a hydraulic or electric motor and said first propulsion unit is a combustion engine.

The method according to the invention is a method for controlling wheel speed individually for each driven wheel in a steerable vehicle that comprises (includes, but is not necessarily limited to) a front axle and at least two rear axles and that has a front wheel drive and rear wheel drive. Said method comprises the steps of:
- registering parameters and value of said parameters:
   a. steering angle of the vehicle,
   b. wheelbase of the vehicle and
   c. wheel track of the vehicle;
- based upon said registered parameter values continuously during vehicle traveling calculating a wheel speed for each of said driven wheel which will minimize wheel slip for said driven wheels;
- controlling wheel speed individually for each said driven wheel in accordance with said calculated wheel speeds and;
- if said wheelbase is altered, then automatically registering said altered wheelbase value and based on said new prevailing parameter values recalculating said wheel speeds for each driven wheel accordingly.

Further advantageous embodiments of the invention emerge from the dependent patent claims following patent claim 1.

### BRIEF DESCRIPTION OF THE DRAWING

The present invention will be described in greater detail below with reference to the accompanying drawings which, for the purpose of exemplification, shows further preferred embodiments of the invention and also the technical background, and in which:
Figure 1a to 1b each diagrammatically shows a top view of a vehicle according to one embodiment of the invention.
Figure 1a and 1b diagrammatically show top views of two different vehicle configurations where vehicle wheelbase can be altered and where different embodiments of the invention can be used.
Figure 2a to 2i diagrammatically show top views of different vehicle configurations where vehicle wheelbase can be altered and where different embodiments of the invention can be used.
Figures 3a to 3c diagrammatically show a side view of how vehicle wheelbase can be altered.
Figure 4a and 4b diagrammatically show a top view of another possibility of how vehicle wheelbase can be altered.
Figure 5 shows the invention applied on a computer arrangement.

### DESCRIPTION OF THE INVENTION

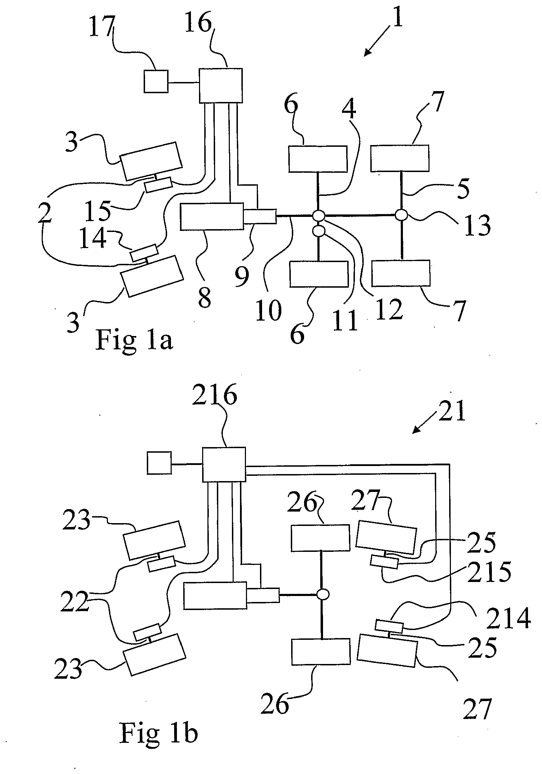

Figure 1a discloses one embodiment of the invention where a vehicle 1 with all wheel drive and Ackerman steering comprises one front axle 2 with driven front wheels 3 and two rear axles (bogie) 4 and 5 with driven wheels 6 and 7. Both said rear axles are driven in a known way, in this shown example, by a first propulsion unit 8, which can be a combustion engine. The combustion engine drives said rear wheels via a transmission 9, a propeller shaft 10 and differentials 11, 12 and 13. Thus, the output torque from said first propulsion unit is evenly distributed between said rear axles 4 and 5, and between said rear wheels 6 and 7 respectively. According to known art, when a vehicle with Ackerman steering turns said wheels will not follow the same track, which means that said wheels will roll with different rotational wheel speeds. For this reason the differential 12 is arranged to compensate for speed differences between said two rear axles, and the differentials 12 and 13 are each of them arranged to perform corresponding compensations in rotational speed difference between the left and right rear wheel for said pairs of rear wheels 6 and 7 respectively.

Said front wheels 3 are individually driven by a second propulsion unit 14 and 15. Said second propulsion unit can be a hydraulic or electric motors arranged as wheel motors in close connection to each of said front wheels. As can be seen in figure 1a said front axle 2 comprises an Ackerman steering device and the wheel motor for one of said front wheels (left or right) is arranged to follow said wheel in its steering motion (twisting in a vertical plane).

Below is mentioned that a wheelbase value is registered. What is meant with the term wheelbase in the following texts is a theoretical wheelbase, which has been calculated according to known geometrical relationships for different steering angles and vehicle configurations that will be further described below. Thus, a memory of a control unit 16 comprises said geometrical relationships in order to be able to calculate a theoretical wheelbase for different steering angles and vehicle configurations. For vehicles with three or more axles, the theoretical wheelbase depends on the load split between the axles. For a truck with a single front axle and a rear bogie, the theoretical wheelbase will be the distance between the front axle and a position between the rear axles. If the load split between the rear axles is 50%, this position will be in the middle of said axles. Depending on, for example, the distribution of goods loaded on the vehicle, the theoretical wheelbase will vary. Further in the embodiments described below the wheels arranged on the axles steerable with an Ackerman steering device can be driven by wheel motors as described above, and the wheels on the axles that are not steerable can be driven with a propulsion unit with a drivetrain comprising transmission, propeller shaft and differentials, as described above.

The drive torque of said propulsion units is controlled by the control unit 16. In the disclosed example said control unit 16 is also arranged to control said transmission 9. The depicted box 17 symbolizes an arrangement for registering parameters used for calculating and controlling wheel speed of said different driven wheels 3, 6 and 7. Said control unit 16 is programmed to perform the following steps:
- register parameters and value of said parameters:
   a. steering angle of the vehicle, that is, steering angle of said Ackerman steering of said front axle in figure 1a,
   b. wheelbase of the vehicle and
   c. wheel track of the vehicle;
- based upon said registered parameter values continuously during vehicle traveling calculate a wheel speed for each of said driven wheel which will minimize wheel slip for said driven wheels;
   - control wheel speed individually for each said driven wheel in accordance with said calculated wheel speeds and;
   - if said wheelbase is altered, then automatically register said altered wheelbase value and based on said new prevailing parameter values recalculate said wheel speeds for each driven wheel accordingly.

According to the invention said control unit is programmed to automatically register if said registered wheelbase parameter value has been altered. If the wheelbase has been altered then the control unit is programmed to recalculate said wheel speeds for each driven wheel accordingly based on said altered wheelbase and prevailing wheel track and steering angle.

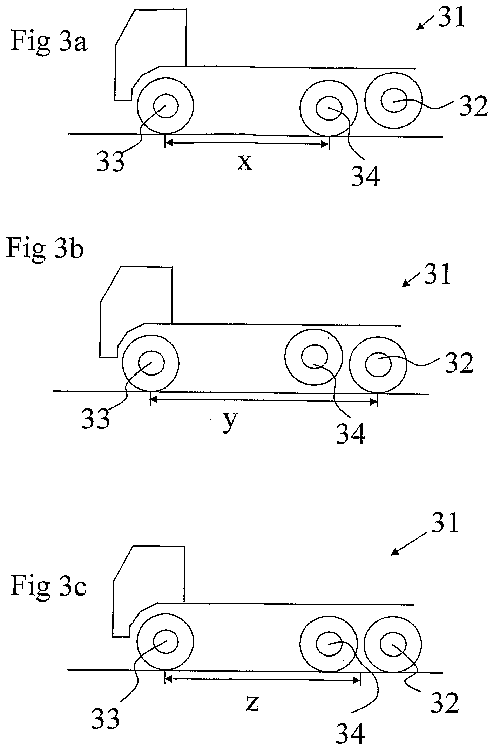

For the embodiment according to figure 1a, figure 3a discloses an example of how said wheelbase can be altered. Figure 3a discloses a truck 31 equipped with a bogie lift according to known art, that is, where for example the rear of the rear axles with wheels 32 can be lifted.. In figure 3a said rear of the rear axles 32 is lifted and the wheelbase is the horizontal distance x between the center of the front wheel 33, and the center of the front rear wheel 34. Figure 3b discloses an example where the front rear axle 34 can be lifted. Thus, a horizontal distance y is obtained between the center of the front wheel 33, and the center of the rear rear wheel 32. In figure 3c none of said rear axles are lifted and the wheelbase is the horizontal distance z between the center of the front wheel 33, and to a point right between said rear wheels 32 and 34, under the condition that axle load of the rear axles 32 and 34 is equal. According to one embodiment of the invention said control unit 16 can be programmed to register via said arrangement for registering parameters 17 if one of said exemplified bogie lifts have been activated or not. This information together with preprogrammed information on said distances z and x and/or y, and mentioned wheel track and prevailing steering angle can be used in order to calculate said wheel speeds.

In another embodiment of the invention said control unit 16 can be programmed to register via said arrangement for registering parameters 17 if axle loads between especially the rear axles differs, for example due to different tyre pressures or if there is a bogie lift, said bogie lift is only partly lifted, that is, the wheels of both rear axles still have ground contact.

Figure 1b discloses another embodiment of the vehicle 21. The main difference between the embodiments of figure 1a and 1b is that in figure 1b there is arranged a second vehicle steering on rear axle 25. This rear axle is principally similar to the steerable front axle 22, that is an Ackerman steering device is arranged on said rear axle 25 with wheel motors 214 and 21.5. The other wheels are driven in same way as in the embodiment shown in figure 1a. Depending of how the steering angles of the first and second steering devices are selected the wheelbase of the vehicle will vary. Note that the steering angles of said first and second steering devices can differ depending on how said steering devices are used in different vehicle conditions. According to the invention the control unit 216 can be programmed to register the prevailing steering angles of the first and second steering devices and based on said prevailing steering angles, wheel base and wheel track calculate rotational wheel speeds of the different driven wheels 23, 26, and 27. Said control unit then controls said propulsion units in order to obtain the calculated rotational speeds.

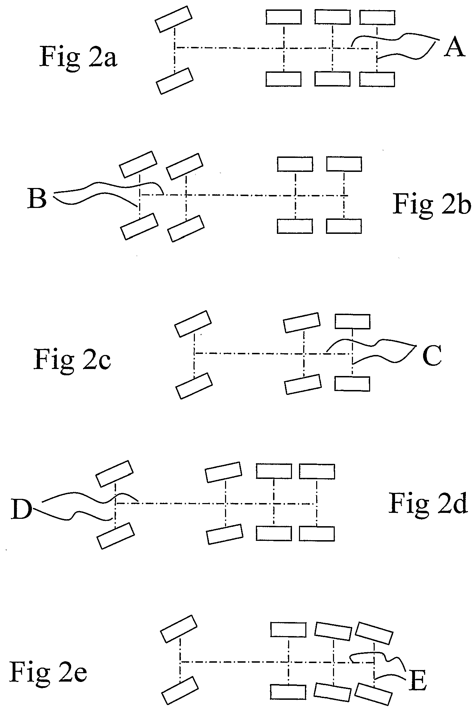

Figure 2a discloses an eight-wheeled all wheel drive vehicle with Ackerman steering on front axle and where one or two of the rear axles can be lifted. Thus, the rear axles is a tridem bogie configuration. Further embodiments can include different combinations of which of the rear axles that can be lifted. Thus, several wheelbases are possible. In a further embodiment the rear of the rear axles can be lifted. Lines A indicate the geometrical centre of a vehicle frame and said axles.

Figure 2b discloses an eight-wheeled all wheel drive vehicle with two front axles and two rear axles. Said front axles comprise a first Ackerman steering device. In similar way as in the embodiment of figure 2a one of the two rear axles can be lifted. Thus, several wheelbases are possible. Lines B indicate the geometrical centre of a vehicle frame and said axles.

Figures 2c to 2g discloses examples of further vehicle configurations where the wheelbase can be altered with a first and a second steering device of Ackerman type and according to the invention prevailing wheelbase can be automatically registered and used for calculating the correct wheel speeds of the driven wheels. In the exemplified embodiments of figures 2c to 2g the wheelbase can be altered by using said first and second vehicle steering devices in combination or one at a time. When used in combination said first and second steering devices can have the same steering angle value or unequal values. The great amount of possibilities can result in a lot of different possible wheelbases.

Figure 2c discloses a six-wheeled all wheel drive vehicle with Ackerman steering device on front axle and front rear axle. In a further embodiment one of the rear axles can be lifted (bogie lift). Lines C indicate the geometrical centre of a vehicle frame and said axles.

The embodiment disclosed in figure 2d discloses an eight-wheeled all wheel drive vehicle with a first Ackerman steering device on a front axle and a second Ackerman steering device on the front rear axle. Also here different combinations of lifted rear axles are possible. Thus, several wheelbases are possible. In a further embodiment the two front rear axles can have a second Ackerman steering device. Lines D indicate the geometrical centre of a vehicle frame and said axles.

The embodiment discloses in figure 2e resembles to the embodiment of figure 2d. The only difference is that the two rear rear axles are equipped with a second steering device. Also here lines E indicate the geometrical centre of a vehicle frame and said axles. In a further embodiment only the rear rear axle can have a second Ackerman steering device.

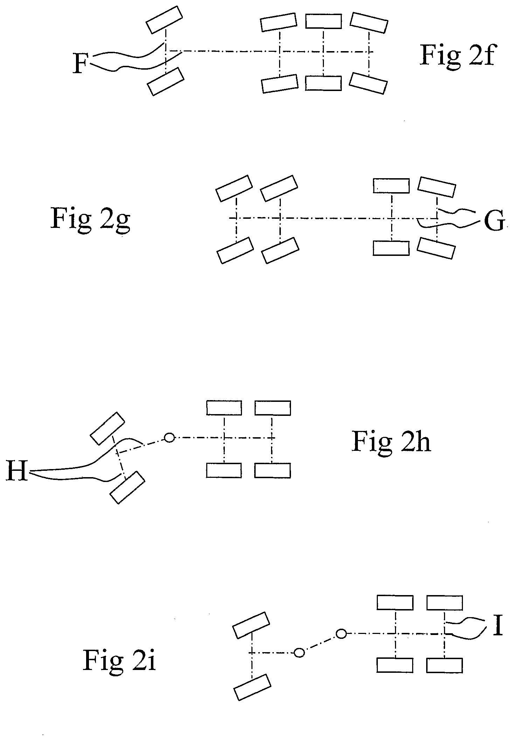

Figure 2f also discloses an eight-wheeled all wheel drive vehicle but with a first Ackerman steering device on front axle and a second Ackerman steering arrangement on the front and the rear of the rear axles. Also here different combinations of lifted rear axles can be possible. Thus, several wheelbases are possible. Lines F indicate the geometrical centre of a vehicle frame and said axles.

Figure 2g discloses an eight-wheeled all wheel drive vehicle with two front axles and two rear axles. Said front axles comprise a first Ackerman steering device and a rear rear axle comprise a second Ackerman steering device. In a further embodiment one of the rear axles can be lifted. In another further embodiment only the front rear axle can have a second Ackerman steering device. Thus, several wheelbases are possible. Lines G indicate the geometrical centre of a vehicle frame and said axles.

Figures 2h and 2i disclose examples of further six-wheeled all wheel drive vehicle configurations with one front axle and two rear axles and where the wheelbase can be altered with at least one first and one second steering device.

In the embodiment of figure 2h a first steering device is an Ackerman steering device arranged on said front axle and a second steering device is an articulated steering device arranged on a vehicle frame H. Said second steering device is arranged between the front axle and the front rear axle. Also here the wheelbase can be altered by using said first and second vehicle steering devices in combination or one at a time. When used in combination said first and second steering devices can have the same steering angle value or different values. The great amount of possibilities can result in a lot of different possible wheelbases.

In the embodiment of figure 2i said first steering device is an Ackerman steering device arranged on said front axle, said second steering device is an articulated steering device arranged on a vehicle frame I. Here, also a third steering device is an articulated steering device arranged on said vehicle frame I. Both said second and third steering devices are arranged between the front axle and the front rear axle. Thus, the wheelbase can be altered by using said first, second and third vehicle steering devices in combination or one at a time. When used in combination said first, second and third steering devices can have the same steering angle value or different values. The great amount of possibilities can result in a lot of different possible wheelbases.

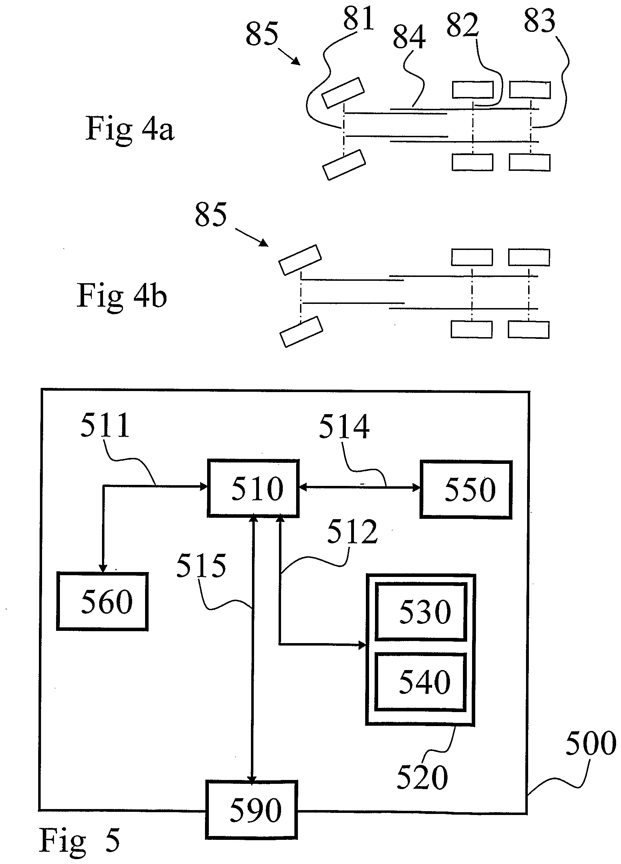

Figures 4a and 4b disclose a six-wheeled all wheel drive vehicle 85 with an Ackerman steering device arranged on a front axle 81 and two rear axles, where in a further embodiment one of said rear axles can be lifted (as described for example in connection to figure 3a to 3c). Said vehicle comprise a telescopic vehicle frame 84 for varying the length of said vehicle frame and, thus, the wheelbase. In figure 4a the vehicle 85 has a shorter wheelbase compared to the same vehicle disclosed in figure 4b. A telescopic frame can result in several possible wheelbases. A combination with a bogie lift increases the number of possible wheelbases.

In connection to the mentioned embodiments above these embodiments can be combined with a device for differentiation of axle load on said rear axles as described above.

In the above described embodiments said first propulsion unit and transmission can also be some kind of hybrid, for example; a parallel hybrid electric vehicle according to known art.

In further embodiments of the above mentioned embodiments said steerable rear axles equipped with an Ackerman steering device can be changed to axle steering devices (see for example WO2005047042). Thus, said calculations has to be adapted to corresponding geaometrical relationships for vehicle configurations comprising axle steering in order to be able to calculate said wheel speeds correct.

In a further embodiment of the invention said vehicle described through the different embodiments above can be connected to a trailer in a tractor-trailer configuration. Said trailer can comprise at least one driven axle with driven wheels and where, according to the invention, wheel speeds of said driven trailer wheels can be calculated in dependence of said above mentioned parameters and, thus, adapted to prevailing parameters values. Said driven wheels on said trailer can for example be driven by wheel motors (corresponding to the above mentioned wheel motors).

The benefit of the invention for all the described embodiments is that the wheel speeds for the driven wheels will be automatically adapted to a prevailing wheelbase (theoretical wheelbase) and minimal wheel slip will occur, leading to fuel savings and decreased tyre wear.

Figure 5 shows an apparatus 500 according to one embodiment of the invention, comprising a nonvolatile memory 520, a processor 510 and a read and write memory 560. The memory 520 has a first memory part 530, in which a computer program for controlling the apparatus 500 is stored. The computer program in the memory part 530 for controlling the apparatus 500 can be an operating system.

The apparatus 500 can be enclosed in, for example, a control unit, such as the control unit 16. The data-processing unit 510 can comprise, for example, a microcomputer.

The memory 520 also has a second memory part 540, in which a program for controlling the driven wheels according to the invention is stored. In an alternative embodiment, the program for controlling the driven wheels is stored in a separate nonvolatile data storage medium 550, such as, for example, a CD or an exchangeable semiconductor memory. The program can be stored in an executable form or in a compressed state.

When it is stated below that the data-processing unit 510 runs a specific function, it should be clear that the data-processing unit 510 is running a specific part of the program stored in the memory 540 or a specific part of the program stored in the nonvolatile recording medium 550.

The data-processing unit 510 is tailored for communication with the memory 550 through a data bus 514. The data-processing unit 510 is also tailored for communication with the memory 520 through a data bus 512. In addition, the data-processing unit 510 is tailored for communication with the memory 560 through a data bus 511. The data-processing unit 510 is also tailored for communication with a data port 590 by the use of a data bus 515.

The method according to the present invention can be executed by the data-processing unit 510, by the data-processing unit 510 running the program stored in the memory 540 or the program stored in the nonvolatile recording medium 550.

The invention should not be deemed to be limited to the embodiments described above, but rather a number of further variants and modifications are conceivable within the scope of the following patent claims.

## Claims

1. A steerable vehicle (1, 21, 31, 85) comprising a first vehicle steering device, vehicle wheels (3, 6, 7, 23, 27, 26, 32, 33, 34) arranged on at least one front axle (2, 22, 81) and on at least two rear axles (4, 5, 25, 82, 83), where said front axle and at least one of said rear axles are driven, and where a control unit (16, 216) is arranged to register parameters;
- steering angle of the vehicle,
- wheelbase of the vehicle (x, y, z),
- wheel track of the vehicle,
and based on said parameters further to calculate a wheel speed for each driven wheel in order to control wheel speed for said driven wheels with minimized wheel slip, **characterized in that** said control unit is arranged to automatically register altered wheelbase (x, y, z) and recalculate said wheel speeds for each driven wheel accordingly.

2. A steerable vehicle as in claim 1, **characterized in that** said wheelbase is altered with at least one of:
a. a device for differentiation of axle load on said rear axles,
b. a bogie lift arranged for lifting one or several of said rear axles,
c. a second vehicle steering device, where said first and second vehicle steering devices are arranged to be used in combination or one at a time,
d. a vehicle frame (84) comprising a device for varying the length of said vehicle frame.

3. A steerable vehicle as in the claim 2, **characterized in that** said first vehicle steering device is an Ackerman steering device arranged on said front wheels and said second vehicle steering device is an articulated steering device arranged on said vehicle frame between said front and rear wheels.

4. A steerable vehicle as in the preceding claim, **characterized in that** a third vehicle steering device is arranged on said vehicle frame between said front and rear wheels as another articulated steering device.

5. A steerable vehicle as in the claim 2, **characterized in that** said first vehicle steering device is an Ackerman steering device arranged on said front wheels and said second vehicle steering device is another Ackerman steering device arranged on said rear wheels.

6. A steerable vehicle as in the preceding claim and where said vehicle comprising three rear axles, **characterized in that** said second steering device is an Ackerman steering device arranged on two of said three rear axles.

7. A steerable vehicle as in the claims 5 or 6 where said vehicle comprising two front axles, **characterized in that** said first steering device is an Ackerman steering device arranged on said two front axles.

8. A steerable vehicle as in one of the preceding claims, **characterized in that** at least one of said rear axles is driven by a first propulsion unit (8), and said wheels on said front axle or axles are individually driven by a second propulsion unit (14, 15) arranged in close connection to each of said front wheels.

9. A steerable vehicle as in the preceding claim, **characterized in that** said second propulsion unit is a hydraulic or electric motor and said first propulsion unit is a combustion engine.

10. Method for controlling wheel speed individually for each driven wheel (3, 6, 7, 23, 27, 26, 32, 33, 34) in a steerable vehicle (1, 21, 31, 85) comprising a front axle (2, 22, 81) and at least two rear axles (4, 5, 25, 82, 83) and having front wheel drive and rear wheel drive, said method comprising the steps of:
- registering parameters and value of said parameters :
a. steering angle of the vehicle,
b. wheelbase of the vehicle and
c. wheel track of the vehicle;
- based upon said registered parameter values
continuously during vehicle traveling calculating a wheel speed for each of said driven wheel which will minimize wheel slip for said driven wheels;
- controlling wheel speed individually for each said driven wheel in accordance with said calculated wheel speeds and;
- if said wheelbase is altered, then automatically registering said altered wheelbase value and based on said new prevailing parameter values recalculating said wheel speeds for each driven wheel accordingly.

11. A computer program comprising program code means for performing all the steps of claim 10 when said program is run on a computer.

12. A computer program product comprising program code means stored on a computer readable medium for performing all steps of claim 10 when said program product is run on a computer.

13. A storage medium, such as a computer memory (520) or a nonvolatile data storage medium (550), for use in a computing environment, the memory comprising a computer readable program code to perform the method of claim 10.

## Patentansprüche

1. Lenkbares Fahrzeug (1, 21, 31, 85), umfassend eine erste Fahrzeuglenkeinrichtung, Fahrzeugräder (3, 6, 7, 23, 27, 26, 32, 33, 34), die an wenigstens einer Vorderachse (2, 22, 81) und wenigstens zwei Hinterachsen (4, 5, 25, 82, 83) angeordnet sind, wobei die Vorderachse und wenigstens eine der Hinterachsen Antriebsachsen sind, und wobei eine Steuerungseinheit (16, 216) dafür eingerichtet ist, Parameter zu erfassen;
- Lenkungswinkel des Fahrzeugs,
- Radstand des Fahrzeugs (x, y, z),
- Radspur des Fahrzeugs,
und auf der Grundlage dieser Parameter weiterhin eine Raddrehzahl für jedes Antriebsrad zu berechnen, um die Raddrehzahl für die Antriebsräder mit minimiertem Radschlupf zu steuern, **dadurch gekennzeichnet, dass** die Steuerungseinheit dafür eingerichtet ist, automatisch einen geänderten Radstand (x, y, z) zu erfassen und die Raddrehzahlen für jedes Antriebsrad entsprechend neu zu berechnen.

2. Lenkbares Fahrzeug nach Anspruch 1, **dadurch gekennzeichnet, dass** der Radstand mit wenigstens einem aus Folgendem geändert wird:
a. einer Einrichtung zur Differenzierung der Achslast an den Hinterachsen,
b. einem Bogielift, der dafür eingerichtet ist, eine oder mehrere der Hinterachsen anzuheben,
c. einer zweiten Fahrzeuglenkeinrichtung, wobei die erste und die zweite Fahrzeuglenkeinrichtung dafür eingerichtet sind, zusammen oder einzeln verwendet zu werden,
d. einem Fahrzeugrahmen (84), der eine Einrichtung zum Variieren der Länge des Fahrzeugrahmens umfasst.

3. Lenkbares Fahrzeug nach Anspruch 2, **dadurch gekennzeichnet, dass** die erste Fahrzeuglenkeinrichtung eine Ackermann-Lenkeinrichtung ist, die an den Vorderrädern angeordnet ist, und die zweite Fahrzeuglenkeinrichtung eine Knicklenkungseinrichtung ist, die an dem Fahrzeugrahmen zwischen den Vorder- und Hinterrädern angeordnet ist.

4. Lenkbares Fahrzeug nach dem vorhergehenden Anspruch, **dadurch gekennzeichnet, dass** eine dritte Fahrzeuglenkeinrichtung an dem Fahrzeugrahmen zwischen den Vorder- und Hinterrädern als weitere Knicklenkungseinrichtung angeordnet ist.

5. Lenkbares Fahrzeug nach Anspruch 2, **dadurch gekennzeichnet, dass** die erste Fahrzeuglenkeinrichtung eine Ackermann-Lenkeinrichtung ist, die an den Vorderrädern angeordnet ist, und die zweite Fahrzeuglenkeinrichtung eine weitere Ackermann-Lenkeinrichtung ist, die an den Hinterrädern angeordnet ist.

6. Lenkbares Fahrzeug nach dem vorhergehenden Anspruch, und wobei das Fahrzeug drei Hinterachsen umfasst, **dadurch gekennzeichnet, dass** die zweite Lenkeinrichtung eine Ackermann-Lenkeinrichtung ist, die an zwei der drei Hinterachsen angeordnet ist.

7. Lenkbares Fahrzeug nach Anspruch 5 oder 6, wobei das Fahrzeug zwei Vorderachsen umfasst, **dadurch gekennzeichnet, dass** die erste Lenkeinrichtung eine Ackermann-Lenkeinrichtung ist, die an den beiden Vorderachsen angeordnet ist.

8. Lenkbares Fahrzeug nach einem der vorhergehenden Ansprüche, **dadurch gekennzeichnet, dass** wenigstens eine der Hinterachsen von einer ersten Antriebseinheit (8) angetrieben wird und die Räder an der Vorderachse oder den Vorderachsen einzeln von einer zweiten Antriebseinheit (14, 15) angetrieben werden, die in enger Verbindung mit jedem der Vorderräder angeordnet ist.

9. Lenkbares Fahrzeug nach dem vorhergehenden Anspruch, **dadurch gekennzeichnet, dass** die zweite Antriebseinheit ein hydraulischer oder elektrischer Motor ist und die erste Antriebseinheit ein Verbrennungsmotor ist.

10. Verfahren zum Steuern der Raddrehzahl für jedes Antriebsrad (3, 6, 7, 23, 27, 26, 32, 33, 34) einzeln in einem lenkbaren Fahrzeug (1, 21, 31, 85), das eine Vorderachse (2, 22, 81) und wenigstens zwei Hinterachsen (4, 5, 25, 82, 83) umfasst und einen Vorderradantrieb und einen Hinterradantrieb aufweist, wobei das Verfahren die Schritte umfasst:
- Erfassen von Parametern und des Werts dieser Parameter:
a. Lenkwinkel des Fahrzeugs
b. Radstand des Fahrzeugs und
c. Radspur des Fahrzeugs;
- Berechnen einer Raddrehzahl für jedes der Antriebsräder, die den Radschlupf für die Antriebsräder minimiert, auf der Grundlage der erfassten Parameterwerte kontinuierlich während der Fahrt des Fahrzeugs;
- Steuern der Raddrehzahl für jedes Antriebsrad einzeln entsprechend der berechneten Raddrehzahlen, und
- wenn der Radstand geändert wird, anschließendes automatisches Erfassen des geänderten Radstandswerts, und entsprechendes Neuberechnen der Raddrehzahlen für jedes Antriebsrad auf der Grundlage der neuen geltenden Parameterwerte.

11. Computerprogramm, umfassend Programmcodemittel zum Durchführen aller Schritte von Anspruch 10, wenn das Programm auf einem Computer läuft.

12. Computerprogrammprodukt, umfassend Programmcodemittel, die auf einem computerlesbaren Medium gespeichert sind, zum Durchführen aller Schritte von Anspruch 10, wenn das Programmprodukt auf einem Computer läuft.

13. Speichermedium wie ein Computerspeicher (520) oder ein permanentes Datenspeichermedium (550) zur Verwendung in einer Rechenumgebung, wobei der Speicher einen computerlesbaren Programmcode zum Durchführen des Verfahrens von Anspruch 10 umfasst.

## Revendications

1. Véhicule orientable (1, 21, 31, 85) comprenant un premier dispositif de direction de véhicule, des roues de véhicule (3, 6, 7, 23, 27, 26, 32, 33, 34) agencées sur au moins un essieu avant (2, 22, 81) et sur au moins deux essieux arrière (4, 5, 25, 82, 83), où ledit essieu avant et au moins l'un desdits essieux arrière sont entraînés, et où une unité de commande (16, 216) est agencée pour enregistrer des paramètres ;
- angle de braquage du véhicule,
- empattement du véhicule (x, y, z),
- voie du véhicule,
et sur la base desdits paramètres pour calculer en outre une vitesse de roue pour chaque roue entraînée afin de commander la vitesse de roue pour lesdites roues entraînées avec un patinage de roues minimisé, **caractérisé en ce que** ladite unité de commande est agencée pour enregistrer automatiquement l'empattement modifié (x, y, z) et pour recalculer lesdites vitesses de roue pour chaque roue entraînée en conséquence.

2. Véhicule orientable selon la revendication 1, **caractérisé en ce que** ledit empattement est modifié avec au moins l'un de :
a. un dispositif de différenciation de charge à l'essieu sur lesdits essieux arrière,
b. un élévateur à bogie agencé pour soulever un ou plusieurs desdits essieux arrière,
c. un deuxième dispositif de direction de véhicule, dans lequel lesdits premier et deuxième dispositifs de direction de véhicule sont agencés pour être utilisés en combinaison ou un à la fois,
d. un châssis de véhicule (84) comprenant un dispositif pour faire varier la longueur dudit châssis de véhicule.

3. Véhicule orientable selon la revendication 2, **caractérisé en ce que** ledit premier dispositif de direction de véhicule est un dispositif de direction Ackermann agencé sur lesdites roues avant et ledit deuxième dispositif de direction de véhicule est un dispositif de direction articulée agencé sur ledit châssis de véhicule entre lesdites roues avant et arrière.

4. Véhicule orientable selon la revendication précédente, **caractérisé en ce qu'**un troisième dispositif de direction de véhicule est agencé sur ledit châssis de véhicule entre lesdites roues avant et arrière en tant qu'autre dispositif de direction articulée.

5. Véhicule orientable selon la revendication 2, **caractérisé en ce que** ledit premier dispositif de direction de véhicule est un dispositif de direction Ackermann agencé sur lesdites roues avant et ledit deuxième dispositif de direction de véhicule est un autre dispositif de direction Ackermann agencé sur lesdites roues arrière.

6. Véhicule orientable selon la revendication précédente et où ledit véhicule comprend trois essieux arrière, **caractérisé en ce que** ledit deuxième dispositif de direction est un dispositif de direction Ackermann agencé sur deux desdits trois essieux arrière.

7. Véhicule orientable selon les revendications 5 ou 6, dans lequel ledit véhicule comprend deux essieux avant, **caractérisé en ce que** ledit premier dispositif de direction est un dispositif de direction Ackermann agencé sur lesdits deux essieux avant.

8. Véhicule orientable selon l'une des revendications précédentes, **caractérisé en ce qu'**au moins l'un desdits essieux arrière est entraîné par une première unité de propulsion (8), et lesdites roues sur ledit ou lesdits essieu(x) avant sont individuellement entraînées par une deuxième unité de propulsion (14, 15) agencée de manière à être étroitement reliée à chacune desdites roues avant.

9. Véhicule orientable selon la revendication précédente, **caractérisé en ce que** ladite deuxième unité de propulsion est un moteur hydraulique ou électrique et ladite première unité de propulsion est un moteur à combustion.

10. Procédé de commande de vitesse de roue individuellement pour chaque roue entraînée (3, 6, 7, 23, 27, 26, 32, 33, 34) dans un véhicule orientable (1, 21, 31, 85) comprenant un essieu avant (2, 22, 81) et au moins deux essieux arrière (4, 5, 25, 82, 83) et ayant un entraînement de roue avant et un entraînement de roue arrière, ledit procédé comprenant les étapes consistant :
- à enregistrer des paramètres et une valeur desdits paramètres :
a. angle de braquage du véhicule,
b. empattement du véhicule et
c. voie du véhicule ;
- sur la base desdites valeurs de paramètres enregistrées en continu au cours du déplacement du véhicule, à calculer une vitesse de roue pour chacune desdites roues entraînées qui minimisera le patinage de roues pour lesdites roues entraînées ;
- commander la vitesse de roue individuellement pour chacune desdites roues entraînées en fonction desdites vitesses de roue calculées et ;
- si ledit empattement est modifié, alors enregistrer automatiquement ladite valeur d'empattement modifiée, et sur la base desdites nouvelles valeurs de paramètres dominantes à recalculer lesdites vitesses de roue pour chaque roue entraînée en conséquence.

11. Programme informatique comprenant un moyen de code de programme pour mettre en oeuvre toutes les étapes de la revendication 10 lorsque ledit programme est exécuté sur un ordinateur.

12. Produit de programme informatique comprenant un moyen de code de programme stocké sur un support lisible par ordinateur pour mettre en oeuvre toutes les étapes de la revendication 10 lorsque ledit produit de programme est exécuté sur un ordinateur.

13. Support de stockage, tel qu'une mémoire informatique (520) ou un support de stockage de données non volatil (550), pour une utilisation dans un environnement informatique, la mémoire comprenant un code de programme lisible par ordinateur pour mettre en oeuvre le procédé de la revendication 10.
